# EUROPEAN PATENT APPLICATION

(11) **EP 2 447 750 A1**
(43) Date of publication of application: **02.05.2012**
(21) Application number: 10306176.8
(22) Date of filing: 27.10.2010
(51) Int. Cl.: G02B 6/255, H01B 11/22, H04B 10/12

(54) **Assembly Comprising At Least One Optical Fibre And A Mounting Device**

(71) Applicant: Alcatel Lucent, 75007 Paris (FR)
(72) Inventor: Brunsch, Dietmar, 30519, Hannover (DE); Schumacher, Otto, 31157, Sarstedt (DE)
(74) Representative: Wetzel, Emmanuelle

(57) **Abstract**

The invention relates to an assembly (AS) comprising at least one optical fibre (FB1, ..., FB6) and a mounting device (EF), the at least one fibre protrudes from the mounting device (EF), and the mounting device (EF) is adapted to terminate a tube (TUB) for inserting the at least one optical fibre (FB1, ..., FB6). The invention further relates to a method for mounting the assembly (AS).

## Description

### FIELD OF THE INVENTION

The invention relates to an assembly comprising at least one optical fibre and a mounting device and to a method for mounting the assembly.

### BACKGROUND

In conventional cellular mobile communication systems such as GSM (GSM = Global System for Mobile Communication) a connection between a base station and an on-site antenna is usually a copper-wire. The base station modulates downlink data into downlink high-frequency signals using an allocated frequency band for example around 900 MHz and a power amplifier of the base station amplifies the downlink high-frequency signals. The amplified downlink high-frequency signals are transmitted usually via a coaxial cable to the on-site antenna and the on-site antenna emits the amplified downlink high-frequency signals forming a radio cell of the base station. The radio cell is for example split into 3 radio sectors with a 120 degree of arc coverage of each radio sector or into 6 radio sectors with a 60 degree of arc coverage of each radio sector. Each radio sector is served by a separate antenna. Conventionally, communication links between the base station and the antennas are separated in uplink communication links and downlink communication links. This means that usually 6 or 12 coaxial cables are installed between a base station rack of the base station and the antennas of the base station.

In future radio communication systems, the energy consumption shall be reduced to reduce the OPEX (OPEX = operating costs) and to provide a contribution for limiting the global warming problem.

In typical 7/8 inch coaxial cables with a length of 30 m, approximately 35 percent of the transmitted signal power is lost by absorption and/or scattering and cannot be used for serving the radio cell of the base station. In comparison to the coaxial cables, optical fibres have an attenuation of less than 1 dB/km. Therefore, new base stations and more and more existing base stations are using optical fibres for a transmission of data between the base station and the antenna instead of the coaxial cables according to an FTTA concept (FTTA = fibre to the antenna). Based on this concept, power amplifiers are located in radio remote heads close to the antenna. Thereby, the power amplifiers do not have to compensate for any cable losses. Furthermore, due to the low losses of the optical fibres radio remote heads and antennas can be installed with a larger distance to the base station and/or power amplifiers with a smaller overall output power can be used.

Data rates in future radio communication systems such as HSPA (HSPA = High Speed Packet Access) or LTE (LTE = Long Term Evolution) will be increased by using a MIMO transmission (MIMO = multiple input multiple output) between the base station and a mobile station. This requires additional or new connections to be installed between the base station and the location of MIMO antenna systems.

### SUMMARY

If existing base stations are upgraded to FTTA the coaxial cables between the base station rack and the antenna may be uninstalled and may be replaced by a fibre-optic cable comprising optical fibres for the data downlink und the data uplink to be connected between the base station rack and the radio remote head and by an electrical cable for the power supply of the radio remote head.

The way of upgrading existing base stations affects installation costs and installation effort.

Therefore, it is an object of the invention to reduce the installation costs and the installation effort.

The object is achieved by an assembly comprising one or several optical fibres and a mounting device. The one or several optical fibres protrude from the mounting device, so that the one or several optical fibres can be inserted to a tube. The mounting device is adapted to terminate the tube and preferably hermitically seals an end face of the tube.

The object is further achieved by a method for mounting the assembly, wherein the method comprises the steps of inserting into the tube the one or several optical fibres of the assembly protruding from the mounting device of the assembly; and terminating the end face of the tube with the mounting device.

The mounting device may be for example a sleeve, an adapter or a connector with a holding fixture for the one or several optical fibres and a clamping fixture for terminating the tube or may comprise a separate retainer for the one or several optical fibres and a cable gland for mounting the retainer to the end face of the tube.

The one or several optical fibres may be single-mode or multi-mode fibres. The tube may be for example a coaxial cable with an inner hollow cylinder and the inner hollow cylinder may be adapted to comprise the one or several optical fibres.

The invention has a first benefit with respect to already installed base stations of reusing one or several of the installed coaxial cables for inserting the one or several optical fibres. Installation costs can be reduced because the optical fibres don't need a special cable jacket for outdoor use. The installed coaxial cable will act as the cable jacket for the one or several optical fibres.

The invention has a second benefit of providing a prepared installation kit.

An installer gets to the location of the radio remote head, cuts an existing coaxial connector of the coaxial cable previously mounted to the antenna and threads the one or several optical fibres through the coaxial cable towards the location of the base station. There is no need to uninstall the installed coaxial cable at the antenna mast and to install a new optical fibre cable system at the antenna mast. Thereby, the installation can be easier performed (no installation work along the antenna mast) and the installation time is considerably reduced.

The invention provides a third benefit of hermetically sealing the end face of the tube by terminating the tube with the mounting device. Thereby, the one or several optical fibres are protected against environmental impacts such as humidity.

The invention provides a fourth benefit of providing a mechanically stable transition from the tube to the exposed optical fibres avoiding any mechanical stress for the optical fibres.

Further advantageous features of the invention are defined and are described in the following detailed description of the invention.

### BRIEF DESCRIPTION OF THE FIGURES

The embodiments of the invention will become apparent in the following detailed description and will be illustrated by accompanying figures given by way of non-limiting illustrations.
Figure 1 shows schematically a block diagram of an assembly in a cross-sectional view according to an embodiment of the invention.
Figure 2 shows schematically a flow diagram of a method for mounting the assembly according to the embodiment of the invention.
Figure 3 shows schematically a block diagram of a base station according to an application of the invention.

### DESCRIPTION OF THE EMBODIMENTS

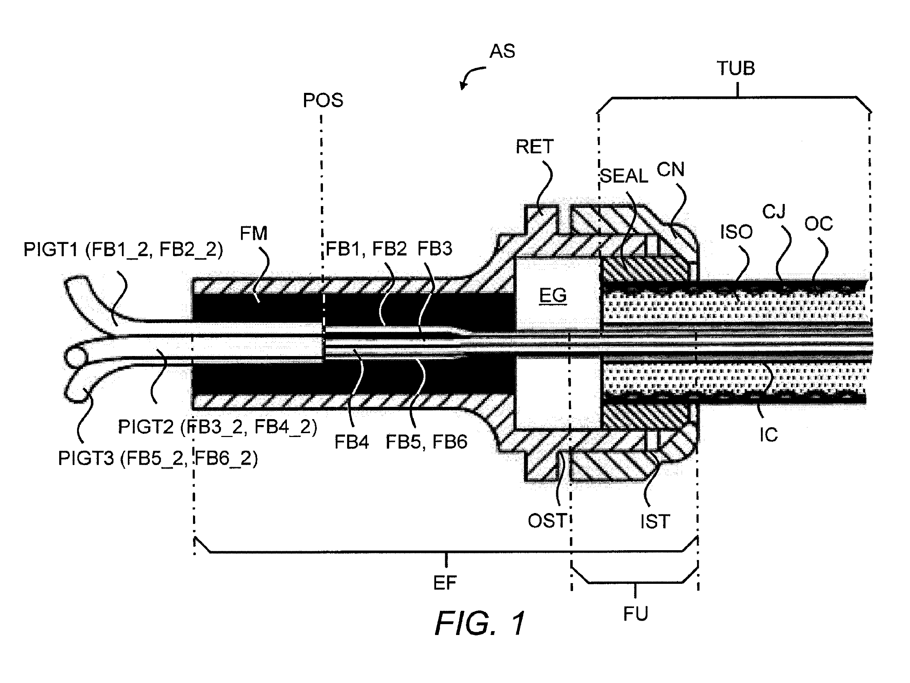

Figure 1 shows schematically a block diagram of an assembly AS in a cross-sectional view according to an exemplarily embodiment of the invention. The assembly AS comprises a mounting device EF and for example a first optical fibre FB1, a second optical fibre FB2, a third optical fibre FB3, a fourth optical FB4, a fifth optical fibre FB5, and a sixth optical fibre FB6 protruding from the mounting device EF. In further alternatives, the assembly AS comprises less or more than six optical fibres protruding from the mounting device EF. The optical fibres FB1 to FB6 may be single-mode or multi-mode fibres.

Preferably, the optical fibres FB1 to FB6 protrude from a first front side of the mounting device with an emersion length, which is adapted to a length of a tube TUB in which the optical fibres FB1 to FB6 can be inserted. More preferably, the emersion length is larger than the length of the tube TUB. The mounting device EF may be for example a sleeve, an adapter or a connector for connecting the mounting device EF to a unit such as a radio remote head.

The mounting device EF as an end fitting for the tube TUB may comprise preferably a separate retainer RET for inclusion of the optical fibres FB1 to FB6 and a fixation unit FU for mounting the retainer RET to an end face of the tube TUB. The fixation unit FU may be for example a cable gland. The cable gland may comprise for example a cap nut CN of Polyamid 6 and a sealing SEAL of Neoprene. The cap nut CN comprises an internal screw thread IST to be screwed to an outer screw thread OST of the retainer RET. The sealing SEAL is located within the cap nut CN and is for example a ring with an inner diameter slightly smaller than an outer diameter of the tube TUB.

Alternatively, the fixation unit FU may be a locking ring to be shifted onto the end face of the tube TUB with an inner diameter slightly smaller than an outer diameter of the tube and with barbs on an inner surface directed towards an outer surface of the tube TUB or may be a heat shrinkable tubing.

In a further alternative, the mounting device EF may be a single workpiece with a retainer functionality for the optical fibres FB1 to FB6 and a fixation functionality for fixing the mounting device EF to the tube TUB.

The retainer RET may be split preferably into a first hollow cylinder with a first inner diameter for fixing the optical fibres FB1 to FB6 and a second hollow cylinder with a second inner diameter larger than the first inner diameter for providing a counterpart for the cable gland. The second inner diameter and an outer diameter of the second hollow cylinder may be adapted to dimensions of the fixation unit FU such as the diameter of the internal screw thread IST and an outer diameter of the sealing SEAL.

A material of the retainer RET may be for example aluminium, stainless steel, Polyamid 6, Polyethylene (PE = polyethylene) or polyvinyl chloride (PVC = polyvinyl chloride. The optical fibres FB1 to FB6 are preferably located centrally along a longitudinal axis of the first hollow cylinder.

In a first alternative, the optical fibres FB1 to FB6 range from a first end face of the retainer RET to a second end face of the retainer RET and protrude from the first and the second end face of the retainer RET.

In a second alternative as shown in Figure 1, the optical fibres FB1 to FB6 are terminated inside the retainer RET by splices at a position POS. Preferably the position POS is located within a middle third of a length of the first hollow cylinder.

The optical fibres FB1 to FB6 extend from the splices for example by a first outdoor pigtail PIGT1, by a second outdoor pigtail PIGT2, and by a third outdoor pigtail PIGT3. The outdoor pigtails PIGT1 to PIGT3 are adapted for use under outdoor environmental conditions.

The first outdoor pigtail PIGT1 may comprise a seventh optical fibre FB1_2, which is spliced to the first optical fibre FB1 and may comprise an eighth optical fibre FB2_2, which is spliced to the second optical fibre FB2. The second outdoor pigtail PGT2 may comprise a ninth optical fibre FB3_2, which is spliced to the third optical fibre FB3 and may comprise an tenth optical fibre FB4_2, which is spliced to the fourth optical fibre FB4. The third outdoor pigtail PIGT3 may comprise an eleventh optical fibre FB5_2, which is spliced to the fifth optical fibre FB5 and may comprise a twelfth optical fibre FB6_2, which is spliced to the sixth optical fibre FB6.

The outdoor pigtails PIGT1 to PIGT3 may comprise protective tubes enclosing in each case two of the optical fibres FB1_2 to FB6_2.

In further alternatives, the outdoor pigtails comprise one optical fibre or more than two optical fibres.

In a further alternative, indoor pigtails may be used instead of the outdoor pigtails PIGT1 to PIGT3, if the assembly AS may be applied according to an indoor application or if the assembly AS is located at a transition from an outdoor location comprising the tube TUB to an indoor location comprising the indoor pigtails.

The optical fibres FB1 to FB6 are fixed within the retainer RET for example by a filler material FM. Preferably, a cross section of the first hollow cylinder, which is perpendicular to a longitudinal axis oriented from the first front side of the fixation unit FU to a second front side of the fixation unit FU is filled with the filler material FM. Thereby, the filler material FM may enclose the splices and may have also a sealing functionality for the end face of the tube TUB.

More preferably, the filler material FM fills out a complete hollow space of the first hollow cylinder.

The filler material FM may be for example a two-component adhesive, epoxy, silicon, vulcanized rubber or polyurethane (PU = polyurethane). The first inner diameter of the first hollow cylinder may be adapted to a number of the optical fibres FB1 to FB6. Furthermore, the first inner diameter of the first hollow cylinder may be adapted to a flow behaviour of filler material FM in a molten or liquid state.

The filler material FM preferably encloses the optical fibres FB1 to FB6 over the length of the first hollow cylinder. The length of the first hollow cylinder may be adapted to a consistency or stiffness of the filler material FM and/or to a mechanical force impacting on the optical fibres FB1 to FB6 during operation of the optical fibres FB1 to FB6. The filler material FM preferably enclose the optical fibres FB1 to FB6 over a length of the optical fibres FB1 to FB6 in a range between 1 cm and 10 cm.

Preferably, distances between end pieces of the optical fibres FB1 to FB6 within the first inner hollow cylinder are larger than distances between the optical fibres FB1 to FB6 protruding from the mounting device EF. This allows the filler material FM to get between the end pieces of the optical fibres FB1 to FB6 and to enclose each of the end pieces of the optical fibres FB1 to FB6 separately. Thereby, the fixation for the optical fibres FB1 to FB6 can be improved.

The second hollow cylinder of the retainer RET is preferably not filled with the filler material FM and is instead filled by an environmental gas EG, which is for example air.

The assembly AS may further comprise the tube TUB (see Figure 1). The mounting device EF is mounted to the end face of the tube TUB and the fibres FB1 to FB6 penetrate the tube TUB from the end face of the tube TUB to an opposite end face of the tube TUB.

An outer perimeter of an end piece of the tube TUB is preferably enclosed by the sealing SEAL of the fixation unit FU.

The tube TUB may be for example a hollow cylinder with a flexible jacket made from a plastic, silicon or rubber material. Preferably, the tube TUB may be a coaxial cable with an inner hollow conductor IC, an outer hollow conductor OC, an isolation material ISO between the inner hollow conductor IC and the outer hollow conductor OC and a cable jacket CJ. The outer hollow conductor OC may be for example a corrugated outer conductor as shown in Figure 1.

An inner diameter of the inner hollow conductor IC is adapted to comprise the optical fibres FB1 to FB6 and is larger than an overall outer diameter of a closely grouped arrangement of the optical fibres FB1 to FB6.

In an alternative, the tube TUB may be a cable with one hollow conductor for inclusion of the optical fibres FB1 to FB6.

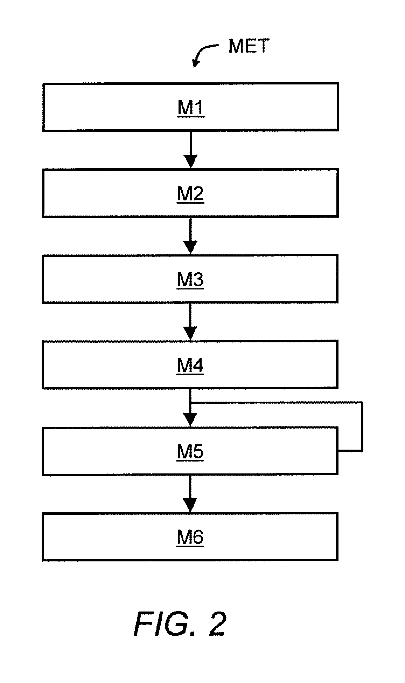

Referring to Figure 2 a flow diagram is shown of a method MET for mounting the assembly AS as shown in Figure 1 to the tube TUB as shown in Figure 1.

The sequence and the number of the steps for performing the method MET is not critical, and as can be understood by those skilled in the art, that the sequence and the number of the steps may vary without departing from the scope of the invention.

The method MET is exemplarily described with respect to an application of the invention for an upgrade of an existing base station of a radio communication system. A person skilled in the art may easily adapt the method MET for other applications of the invention.

In a first step M1, an installer of a mobile radio vendor or of a mobile radio operator may carry the assembly AS comprising the optical fibres FB1 to FB6 and the mounting device EF to a top section of an antenna mast or to a roof of a building equipped with an antenna system.

In a further step M2, the installer may disassemble a connection between a coaxial cable TUB and the antenna system. The disassembly may be performed for example by removing a coaxial connector terminating the coaxial cable TUB or by simply cutting the coaxial cable TUB near the coaxial connector.

In a further step M3, the cab nut CN of the cable gland may be plugged on an end piece of the coaxial cable TUB.

In a next step M4, the installer inserts end pieces of the optical fibres FB1 to FB6 protruding from the mounting device EF into the inner hollow conductor IC of the coaxial cable TUB. In an alternative, the insertion may be performed automatically by a tool by aligning the optical fibres FIB to FB6 centrally according to the end face of the coaxial cable TUB and by moving the optical fibres FB1 to FB6 towards the end face of the coaxial cable TUB. This automatically alignment may prevent any damages to the optical fibres FB1 to FB6.

In further repeated steps M5, the installer slides the optical fibres FB1 to FB6 stepwise into the inner hollow conductor IC of the coaxial cable TUB until the mounting device EF comes close to the end face of the coaxial cable TUB. In an alternative, the tool picks the optical fibres FB1 to FB6 stepwise and moves the optical fibres FB1 to FB6 stepwise towards the end face of the coaxial cable TUB.

Thereby, the optical fibres FB1 to FB6 slip stepwise through the coaxial cable TUB.

In a next step M6, the installer terminates the end face of the coaxial cable TUB with the mounting device EF for example by screwing the cap nut to the retainer RET. Thereby, the end face of the coaxial cable TUB may be in contact with the filler material FM of the first hollow cylinder or there may exist a hollow space between the filler material FM and the end face of the coaxial cable TUB in a longitudinal direction of the optical fibres FB1 to FB6.

In an alternative, the tool may automatically execute the termination by mounting the cap nut with a predefined torsional moment at the retainer RET.

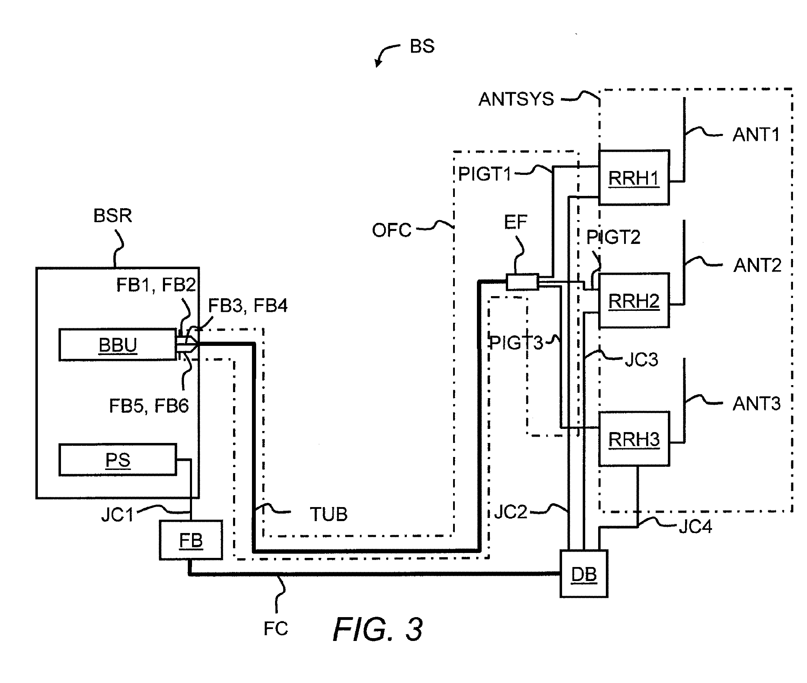

Figure 3 shows schematically a block diagram of a base station BS according to an application of the invention. The elements in Figure 3 that correspond to elements of Figure 1 have been designated by same reference numerals.

The base station BS comprises basically a base station rack BSR, an antenna system ANTSYS, a feeder cable FC for providing electrical power from the base station rack BSR to the antenna system ANTSYS and an optical fibre connection OFC for transmitting user and signalling data between the base station rack BSR and the antenna system ANTSYS.

The base station rack BSR may be located for example at ground level and the antenna system ANTSYS may be located on top of a roof of a building or on top of a freestanding antenna mast.

The base station rack BSR comprises a base band unit BBU and a power supply PS. The base band unit BBU is adapted to provide preferably digital optical signalling data or user data to be transmitted to radio remote heads RRH1, RRH2, RRH3. The radio remote heads RRH1, RRH2, RRH3 are adapted to transform the optical downlink data into radio frequency signals and to provide the radio frequency signals to the antenna system ANTSYS. The antenna system ANTSYS transmits the radio frequency signals to mobile stations connected via wireless links to the base station BS. A corresponding processing is provided in the uplink direction from the mobile station via the antenna system ANTSYS and the radio remote heads RRH1, RRH2, RRH3 to the base band unit BBU. This is common knowledge and therefore not explained in more detail.

Preferably, the base station BS further comprises a fuse box FB in a short distance to the power supply PS with fuses for overvoltage and lightning protection purposes for conductors of the feeder cable FC and jumper cables JC1, JC2, JC3, JC4.

The power supply PS may be connected to the fuse box FB with a first jumper cable JC1. The feeder cable FC may be connected with a first end piece to the fuse box FB and with a second end piece to a distribution box DB. The distribution box DB provides an electrical parallel connection for connecting the jumper cables JC2 to JC4. A second jumper cable JC2 is connected to a power supply port of a first radio remote head RRH1. A third jumper cable JC3 is connected to a power supply port of a second radio remote head RRH2. A fourth jumper cable JC4 is connected to a power supply port of a third radio remote head RRH3.

The radio remote heads RRH1, RRH2, RRH3 comprises one or several antennas ANT1, ANT2, ANT3 for radio links between the radio remote heads RRH1, RRH2, RRH3 and one or several mobile stations such as mobiles, notebooks or PDAs (PDA = personal digital assistant).

Preferably, each radio remote head RRH1, RRH2, RHH3 provides radio coverage for a separate sector of a radio cell of the base station BS.

The optical fibre connection OFC may comprise the tube TUB, the mounting device EF, the optical fibres FB1 to FB6 and the outdoor pigtails PIGT1 to PIGT3.

The optical fibres FB1, FB2 and the first outdoor pigtail PIGT1 are connecting the base band unit BBU with the first radio remote head RRH1. Preferably, a first one of the fibres FB1, FB2 is used for a downlink connection from the base band unit BBU to the first radio remote head RRH1 and a second one of the fibres FB1, FB2 is used for an uplink connection from the first radio remote head RRH1 to the base band unit BBU. Similarly, the optical fibres FB3, FB4 and the second outdoor pigtail PIGT2 may be connecting the base band unit BBU with the second radio remote head RRH2 and the optical fibres FB5, FB6 and the third outdoor pigtail PIGT3 may be connecting the base band unit BBU with the third radio remote head RRH3.

Alternatively, the optical fibre connection OFC may comprise for each of the radio remote heads RRH1 to RRH3 a single optical fibre for connecting the base band unit BBU to one of the radio remote heads RRH1 to RRH3. In such a case, downlink and uplink signals may use different optical wavelengths and optical add-drop multiplexers may be used at the base band unit BBU and the radio remote heads RRH1 to RRH3 for adding and dropping the optical wavelengths.

In further alternatives, the base station BS may comprise less or more than three radio remote heads and the assembly AS comprises less or more than six optical fibres.

## Claims

1. An assembly (AS) comprising at least one optical fibre (FB1, ..., FB6) and a mounting device (EF), said at least one fibre protrudes from said mounting device (EF), and said mounting device (EF) is adapted to terminate a tube (TUB) for inserting said at least one optical fibre (FB1, ..., FB6).

2. Assembly (AS) according to claim 1, wherein a cross section of a hollow space inside said mounting device (EF) and perpendicular to a longitudinal axis oriented from a first front side of said mounting device (EF) to a second front side of said mounting device (EF) is filled with a filler material (FM).

3. Assembly (AS) according to claim 2, wherein said filler material (FM) encloses a splice for said at least one optical fibre (FB1, ..., FB6).

4. Assembly (AS) according to claim 3, wherein said at least one optical fibre (FB1, ..., FB6) is extended from said splice by an outdoor pigtail (PIGT1, ..., PIGT3).

5. Assembly (AS) according to any of the claims 2 to 4, wherein said filler material (FM) is a two-component adhesive, epoxy, silicon or vulcanized rubber.

6. Assembly (AS) according to any of the claims 2 to 5, wherein said filler material (FM) encloses said at least one optical fibre (FB1, ..., FB6) over a predefined longitudinal length of said at least one optical fibre (FB1, ..., FB6) and wherein said predefined length is adapted to a consistency and/or stiffness of said filler material (FM) and/or to a mechanical force impacting on said at least one optical fibre (FB1, ..., FB6).

7. Assembly (AS) according to claim 6, wherein said predefined length is in a range between 1 cm and 10 cm.

8. Assembly (AS) according to any of the preceding claims, wherein said assembly (AS) further comprises said tube (TUB), wherein said mounting device (EF) is mounted to an end face of said tube (TUB) and wherein said at least one fibre penetrates said tube (TUB) from said end face to an opposite end face of said tube (TUB).

9. Assembly (AS) according to claim 8, wherein said mounting device (EF) comprises a first cylindrical part (RET) completely or partly filled with said filler material (FM) and a second part (FU) mounted to said first cylindrical part (RET) and mounted to said end face of said tube (TUB).

10. Assembly (AS) according to claim 9, wherein said second part (FU) is a cable gland.

11. Assembly (AS) according to any of the preceding claims, wherein said tube (TUB) is a coaxial cable with an inner hollow conductor (IC) and wherein said inner hollow conductor (IC) is adapted to comprise said at least one optical fibre (FB1, ..., FB6).

12. A Base station (BS) comprising said assembly (AS) according to claim 8, 9, 10 or 11.

13. Method (MET) for mounting an assembly (AS), said method (MET) comprising the steps of:
- inserting (M4) into a tube (TUB) at least one optical fibre (FB1, ..., FB6) of said assembly (AS) protruding from a mounting device (EF) of said assembly (AS); and
- terminating (M6) an end face of said tube (TUB) with said mounting device (EF).
